# EUROPÄISCHE PATENTSCHRIFT

(11) **EP 2 879 243 B1**
(45) Veröffentlichungstag und Bekanntmachung des Hinweises auf die Patenterteilung: **20.02.2019**
(21) Anmeldenummer: 14003354.9
(22) Anmeldetag: 29.09.2014
(51) Int. Cl.: H01R 13/627

(54) **Steckerteil**
Plug
Fiche mâle

(30) Priorität: 29.11.2013 DE 102013017989
(43) Veröffentlichungstag der Anmeldung: 03.06.2015
(73) Patentinhaber: NEUTRIK AG, 9494 Schaan (LI)
(72) Erfinder: Ender, Norbert, 6833 Fraxern (AT)
(74) Vertreter: Fechner, Thomas

(56) Entgegenhaltungen:
- DE-A1- 3 539 988
- US-A- 4 762 505
- US-A- 5 449 298

## Beschreibung

Die vorliegende Erfindung betrifft ein Steckerteil, wie es im Oberbegriff des Patentanspruchs 1 beschrieben ist.

Steckerteile sind in einer Vielzahl von Ausgestaltungsformen des Standes der Technik bekannt. Sie können zur Verbindung von elektrischen und/oder optischen Datenleitungen oder auch zur Versorgung von Geräten mit Netzspannung bzw. Netzstrom eingesetzt werden. Häufig werden in der Praxis Strom- und/oder Datenkabel, welche zu einem Gerät führen, missbräuchlich auch dazu verwendet, das Gerät zu ziehen, abzuseilen oder dergleichen. Da die Daten- und/oder Stromkabel und ihre Anbindung an das jeweilige Gerät in der Regel nicht hierfür ausgelegt sind, kann es dabei zum teilweisen oder vollständigen Abreißen des Kabels vom Gerät oder zumindest zum Ausreißen einzelner Kontakte kommen. Weiters kann es zur Überdehnung des Kabels mit bleibender Beschädigung des Kabels kommen. All dies kann einerseits zum Ausfall des Gerätes, aber auch zu Kurzschlüssen, Kabelbränden oder dergleichen führen.

Die DE 35 39 988 A1 offenbart in verschiedenen Ausgestaltungsformen Steckverbindungen, welche für den Fall, dass übermäßig am Kabel gezogen wird, einen eigenen Lösemechanismus aufweisen.

Aufgabe der Erfindung ist es, ein Steckerteil der oben genannten Art für eine Steckverbindung bereitzustellen, welche in den genannten Missbrauchsfällen unter definierten Bedingungen gelöst wird und mit einer anderen Charakteristik aber wieder verbunden werden kann.

Zur Lösung dieser Aufgabe wird ein Steckerteil gemäß des Patentanspruchs 1 vorgeschlagen.

In anderen Worten ist somit vorgesehen, dass das Verriegelungselement in zumindest zwei voneinander verschiedenen Richtungen, nämlich einerseits in der Verriegelungsrichtung und andererseits in der Freigaberichtung, insbesondere zerstörungsfrei und/oder reversibel, bewegbar ist. Hierdurch wird es möglich, dass beim Bewegen des Verriegelungselementes in die eine Richtung eine andere Charakteristik eingestellt ist als in die andere Richtung. In der Freigabestellung ist das Verriegelungselement in einer Position angeordnet, in der es nicht in die Verriegelungselementaufnahme des Gegensteckerteils eingreifen kann. Dies gilt auch für die weiter unten genannte, weitere Freigabestellung.

Die Freigaberichtung und die Verriegelungsrichtung sind wie gesagt abgewinkelt zueinander angeordnet. Dies bedeutet, dass sie weder koaxial noch parallel zueinander liegen. Sie schließen also einen von 0°, 180° und den ganzzahligen Vielfachen von 180° abweichenden Winkel miteinander ein.

Das Steckerteil und das Gegensteckerteil bilden in ihrem vollständig zusammengesteckten Zustand eine Steckverbindung. In dem genannten vollständig zusammengesteckten Zustand greift das Verriegelungselement zur Verriegelung von Steckerteil und Gegensteckerteil miteinander in seiner Eingriffsstellung in die Verriegelungselementaufnahme des Gegensteckerteils ein. Günstigerweise handelt es sich bei diesem Eingriff des Verriegelungselementes des Steckerteils in die Verriegelungselementaufnahme des Gegensteckerteils um eine mittels des Vorspannelementes elastisch einrastende Rastverbindung. Das Vorspannelement spannt das Verriegelungselement in der Verriegelungsrichtung hin zur Eingriffsstellung elastisch vor. Hierzu kann das Vorspannelement verschiedenartig ausgebildet sein. Es kann sich um verschiedene Arten von Federn, wie z.B. Schraubenfedern, Blattfedern, Torsionsfedern oder dergleichen handeln. Diese Federn können aus Metall oder anderen geeigneten Werkstoffen gefertigt sein. Bei dem Vorspannelement kann es sich aber auch um einen Elastomerkörper oder dergleichen handeln. Besonders bevorzugt ist vorgesehen, dass das Verriegelungselement ausschließlich mittels des Vorspannelementes elastisch vorgespannt ist. In diesem Fall kommt das Steckerteil somit für die benötigte Vorspannung mit einem einzigen Vorspannelement aus. Abweichend hierfür können zwei oder mehr Vorspannelemente vorgesehen sein.

Die Erfindung sieht vor, dass das Verriegelungselement gegen die Vorspannung des Vorspannelementes aus der Eingriffsstellung heraus in einer zur Verriegelungsrichtung entgegen gesetzten Richtung in eine weitere Freigabestellung linear verschiebbar ist. Das Verriegelungselement kann somit zumindest in drei Richtungen bewegt werden, nämlich in die Verriegelungsrichtung, in die dazu entgegengesetzte Richtung und in die Freigaberichtung. Natürlich können auch mehr als eine abgewinkelte Freigaberichtung und damit noch mehr als zwei Freigabestellungen möglich sein. Die Bewegung des Verriegelungselementes in die Freigaberichtung erfolgt bevorzugt gegen eine Vorspannung des Verriegelungselementes mittels des Vorspannelementes. Die dazu entgegengesetzte Rückbewegung des Verriegelungselementes aus der Freigabestellung in die Eingriffsstellung erfolgt günstigerweise mittels des Vorspannelementes. Besonders bevorzugte Ausgestaltungsformen sehen vor, dass ausgehend von der Eingriffsstellung zur Bewegung des Verriegelungselementes in der zur Verriegelungsrichtung entgegen gesetzten Richtung größere Kräfte notwendig sind als zur Bewegung des Verriegelungselementes in der Freigaberichtung. Es kann z.B. vorgesehen sein, dass das Vorspannelement das Verriegelungselement in der Verriegelungsrichtung stärker als in der Freigaberichtung vorspannt. Dies kann z.B. dazu benutzt werden, dass das Verriegelungselement beim Zusammenstecken von Steckerteil und Gegensteckerteil zur Herstellung der Steckverbindung mit einer relativ geringen Kraft in Freigaberichtung in die Freigabestellung bewegt werden kann, während beim Lösen der Steckverbindung, also beim Auseinanderziehen von Steckerteil und Gegensteckerteil das Verriegelungselement in die der Verriegelungsrichtung entgegengesetzte Richtung in die weitere Freigabestellung bewegt werden muss, wobei dann in den genannten Ausführungsformen eine wesentlich höhere Kraft zu überwinden ist. Dies ist ein Beispiel, wie die Charakteristika beim Zusammenstecken von Steckerteil und Gegensteckerteil gezielt anders eingestellt werden können, als beim Auseinanderziehen dieser Steckverbindung. Dies kann insbesondere so eingesetzt werden, dass im eingangs genannten Missbrauchsfall, also z.B. beim missbräuchlichen Ziehen eines Gerätes am Netz- oder Datenkabel, sich das Steckerteil und das Gegensteckerteil ab einem gewissen, vorab eingestellten Kraftschwellenwert voneinander lösen, während die Kräfte, welche beim Wiederzusammenstecken von Steckerteil und Gegensteckerteil überwunden werden müssen, wesentlich geringer sind. Die jeweils zu überwindenden Kräfte können sehr genau durch die Wahl eines entsprechenden Vorspannelementes und/oder die entsprechenden Winkel und Geometrien eingestellt werden. Besonders bevorzugte Varianten sehen in diesem Zusammenhang vor, dass die Vorspannung des Vorspannelementes mittels eines Stellelementes verstellbar ist.

Besonders bevorzugte Varianten der Erfindung sehen vor, dass die Maximalkraft des Vorspannelementes in der Verriegelungsrichtung wirkt. In allen anderen Richtungen, also insbesondere auch in der Freigaberichtung wirkt das Vorspannelement dann mit geringeren Kräften auf das Verriegelungselement ein. Es kann auch vorgesehen sein, dass in Freigaberichtung keine oder so gut wie keine Kräfte vom Vorspannelement auf das Verriegelungselement ausgeübt werden. Bei der Ausbildung eines Vorspannelementes in Form einer Schraubenfeder kann z.B. sichergestellt werden, dass die Maximalkraft in der Verriegelungsrichtung wirkt, indem die Mittelachse der Schraubenfeder parallel bzw. koaxial zur Verriegelungsrichtung angeordnet ist.

Die Erfindung sieht vor, dass das Verriegelungselement in der Verriegelungsrichtung und in der dazu entgegengesetzten Richtung linear verschiebbar im oder am Steckerteil gelagert ist. Auch in der Freigaberichtung ist
grundsätzlich ein Verschieben, also ein lineares Bewegen des Verriegelungselementes möglich. Bevorzugte Ausgestaltungsformen sehen jedoch vor, dass das Verriegelungselement in der Freigaberichtung verschwenkbar gelagert ist. Es kann auch eine Überlagerung einer linearen Translationsbewegung und einer Verschwenkbewegung vorliegen, um das Verriegelungselement in Freigaberichtung zu bewegen. Insbesondere die Freigaberichtung muss also nicht zwingend linear ausgebildet sein.

Eingangs wurde bereits darauf hingewiesen, dass das Verriegelungselement beim Zusammenstecken von Steckerteil und Gegensteckerteil in Freigaberichtung in die Freigabestellung bewegbar sein kann. Ein Bewegen des Verriegelungselementes in Freigaberichtung kann aber auch für ein einfaches, gezieltes voneinander Lösen von Steckerteil und Gegensteckerteil eingesetzt werden. Hierzu kann z.B. vorgesehen sein, dass am Verriegelungselement ein Ansatzelement für ein von außen betätigbares verschwenkbares und/oder verschiebbares Betätigungselement des Steckerteils angeordnet ist. Durch Betätigen des Betätigungselementes, z.B. von Hand, ist dann ein relativ kräftearmes Bewegen des Verriegelungselementes in Freigaberichtung in die Freigabestellung möglich, um Steckerteil und Gegensteckerteil gezielt voneinander zu trennen. Das Betätigungselement kann hierzu verschwenkbar und/oder auch verschiebbar z.B. am Gehäuse des Steckerteils gelagert sein.

Grundsätzlich kann das erfindungsgemäße Steckerteil sowohl männlich als auch weiblich ausgebildet sein. Besonders bevorzugte Ausgestaltungsformen der Erfindung sehen aber vor, dass das Steckerteil eine Buchse ist, in die das Gegensteckerteil einschiebbar ist. Beim Zusammenstecken von Steckerteil und Gegensteckerteil wird in diesen Fällen somit das Gegensteckerteil zumindest bereichsweise in einen entsprechenden Aufnahmehohlraum des als Buchse ausgebildeten Steckerteils eingeschoben. Die Buchse kann als selbstständiges Bauteil ausgeführt sein, um in oder an einem Gehäuse eines Gerätes oder auch an einem Kabel angeordnet zu werden. Es ist aber auch denkbar, dass die Buchse direkt in das Gehäuse eines entsprechenden Gerätes integriert ist. Bei dem Steckerteil in Form einer Buchse kann man auch in den entsprechenden Anwendungsfällen von einem Chassisstecker sprechen.

Unabhängig davon, ob das Steckerteil nun männlich oder weiblich bzw. als Buchse ausgebildet ist, ist bei bevorzugten Varianten günstigerweise vorgesehen, dass das Steckerteil in einer Zusammensteckrichtung mit dem Gegensteckerteil zusammensteckbar ist und die Zusammensteckrichtung und die Verriegelungsrichtung in einem spitzen Winkel kleiner 90° relativ zueinander angeordnet sind.

Neben dem Steckerteil an sich betrifft die Erfindung auch eine Steckverbindung, welche dadurch gekennzeichnet ist, dass sie ein erfindungsgemäßes Steckerteil und ein Gegensteckerteil aufweist, wobei das Verriegelungselement des Steckerteils im vollständig zusammengesteckten Zustand von Steckerteil und Gegensteckerteil in der Eingriffsstellung in die Verriegelungselementaufnahme des Gegensteckerteils eingreift. Natürlich können bei solchen erfindungsgemäßen Steckverbindungen auch mehrere erfindungsgemäße Steckerteile mit mehreren Gegensteckerteilen zusammengesteckt werden. Genauso gut ist es möglich, dass die Steckverbindungen ein entsprechendes Steckerteil und mehrere Gegensteckerteile aufweist und umgekehrt.

Bevorzugt ist jedenfalls vorgesehen, dass das Verriegelungselement beim Zusammenstecken von Steckerteil und Gegensteckerteil in Freigaberichtung in die Freigabestellung bewegt wird. Zum Lösen dieser Steckverbindung, also zum Auseinanderziehen von Steckerteil und Gegensteckerteil im Missbrauchsfall ist günstigerweise vorgesehen, dass das Verriegelungselement gegen die Vorspannung des Vorspannelementes aus der Eingriffsstellung heraus in der zur Verriegelungsrichtung entgegengesetzten Richtung in die weitere Freigabestellung bewegt wird. Für ein gezieltes Lösen der Steckverbindung wird das Verriegelungselement günstigerweise in Freigaberichtung aus der Eingriffsstellung in die Freigabestellung bewegt. Hierzu wird das Verriegelungselement günstigerweise vom bereits genannten verschwenkbaren und/oder verschiebbaren Betätigungselement, welches an dem Ansatzelement des Verriegelungselementes angreift, bewegt.

Erfindungsgemäße Steckerteile und entsprechende Gegensteckerteile bzw. Steckverbindungen können für unterschiedlichste Einsatzbereiche realisiert werden. Z.B. können sie zur Netzstromversorgung aber genauso gut auch zur Datenübertragung oder auch zu Mischformen aus Netzstromversorgung und Datenübertragung eingesetzt werden. Unter Netzstromversorgung ist dabei der Anschluss eines Arbeitsgerätes oder sonstigen Gerätes an ein öffentliches oder internes Stromnetz zur Stromversorgung zu verstehen. Es kann sich dabei z.B. um das übliche öffentliche Dreiphasenwechselstromnetz mit 230Volt und 50Hertz in Europa handeln. In Nordamerika wäre ein solches öffentliches Stromnetz das Einphasendreileiternetz mit 120Volt und 240Volt Netzspannung und einer Netzfrequenz von 60 Hertz. Erfindungsgemäße Steckerteile könne natürlich auch für Starkstromanwendungen, Gleichstromanwendungen usw. eingesetzt werden. Besonders bevorzugt werden erfindungsgemäße Steckerteile zur Netzstromversorgung von, von Hand geführten Arbeitsgeräten wie z.B. Bohrmaschinen, Sägen, Schleifgeräten und dergleichen eingesetzt.

Weitere Merkmale und Einzelheiten eines bevorzugten Ausführungsbeispiels der Erfindung werden nachfolgend anhand der Figurenbeschreibung erläutert. Es zeigen:
Fig. 1 bis 6 verschiedene Stellungen beim Zusammenstecken und Wiederauseinanderstecken eines erfindungsgemäßen Steckerteils mit dem entsprechenden Gegensteckerteil;
Fig. 7 das Gegensteckerteil losgelöst vom Steckerteil, wobei das Steckerteil in einer Explosionsdarstellung gezeigt ist;
Fig. 8 bis 12 verschiedene Darstellungen zum erfindungsgemäßen Steckerteil dieses Ausführungsbeispiels.

Im gezeigten Ausführungsbeispiel handelt es sich beim Gegensteckerteil 2 um einen Kabelstecker, an dem ein Kabel 16 befestigt ist. Es kann sich z.B. um ein Netzstromversorgungskabel oder aber auch um ein Datenkabel handeln. Das erfindungsgemäße Steckerteil 1 mit der Verriegelungseinrichtung 3 ist als Buchse bzw. Chassissteckerteil ausgebildet. Das Gehäuse 13 dieses Steckerteils 1 kann als separates Bauteil ausgeführt aber auch in das Gehäuse eines entsprechenden Gerätes, insbesondere handgeführten Arbeitsgerätes wie sie beispielhaft eingangs genannt wurden, integriert sein. Das Zusammenstecken von Steckerteil 1 und Gegensteckerteil 2 erfolgt in Zusammensteckrichtung 12. Zum Trennen von Steckerteil 1 und Gegensteckerteil 2 müssen diese beiden Teile der Steckverbindung in zur Zusammensteckrichtung 12 entgegengesetzten Richtung auseinandergezogen werden. Die Verriegelungseinrichtung 3 ist Teil des Steckerteils 1 und hier im Gehäuse 13 des Steckerteils 1 in einem entsprechenden Aufnahmeraum 23 angeordnet. Beim Zusammenstecken wird das Gegensteckerteil 2 in den Aufnahmehohlraum 28 des Gehäuses 13 des Steckerteils 1 eingeschoben. Damit Steckerteil 1 und Gegensteckerteil 2 nur in einer einzigen Stellung miteinander verbunden werden können, können entsprechende Indexierungen wie sie hier z.B. durch die Indexschiene 17 des Gehäuses 13 des Steckerteils 1 realisiert sind, vorgesehen sein. Das Gegensteckerteil 2 weist eine entsprechende Nut auf, die hier nicht zu sehen ist. Im Aufnahmehohlraum 28 des Steckerteils 1 befinden sich auch die Kontakthülsen 14, welche wie weiter hinten noch erläutert, die Elektrokontakte 18 dieses Ausführungsbeispiels beherbergen. Im gezeigten Ausführungsbeispiel ist das Gehäuse 13 des Steckerteils 1 dreiteilig in Form des Gehäuseteils 21 des Gehäuseteils 22 und des Kontaktträgers 20 ausgebildet. Dies kann aber natürlich auch anders z.B. als einstückiges Gehäuse 13 realisiert sein. Der Kontaktträger 20 weist jedenfalls die bereits genannten Kontakthülsen 14 auf.

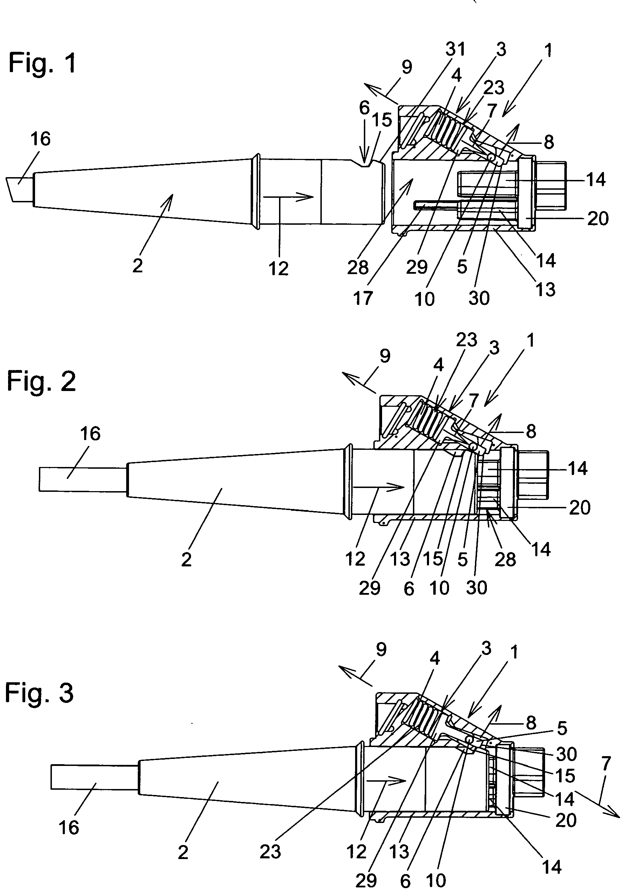

In den Fig. 1 bis 6 ist das Gehäuse 13, abgesehen vom Kontaktträger 20 in einem Längsschnitt dargestellt. Im gezeigten Ausführungsbeispiel kann dies z.B. dadurch erreicht werden, dass das Gehäuseteil 22 vom Gehäuseteil 21 abgenommen wird. Besonders gut zu sehen sind in diesen Schnittdarstellungen das Vorspannelement 4 und das Verriegelungselement 5 der Verriegelungseinrichtung 3. Beide Teile sind im bereits genannten Aufnahmeraum 23 des Gehäuses 13 angeordnet. Beim Vorspannelement 4 handelt es sich im gezeigten Ausführungsbeispiel um eine, vorzugsweise aus Metall gefertigte, Schraubenfeder. Dieses Vorspannelement 4 spannt das Verriegelungselement 5 elastisch vor. Die Maximalkraft des Vorspannelementes 4 wirkt in der Verriegelungsrichtung 7. Im gezeigten Ausführungsbeispiel wird dies erreicht, indem die das Vorspannelement 4 bildende Schraubenfeder mit ihrer Mittelachse koaxial zur Verriegelungsrichtung 7 angeordnet ist. Das Verriegelungselement 5 weist im gezeigten Ausführungsbeispiel einen Druckteller 29 auf. Das Vorspannelement 4 wirkt über den Druckteller 29 auf das Verriegelungselement 5 ein. Auf der dem Druckteller 29 entgegengesetzten Seite weist das Verriegelungselement 5 die Verriegelungsnase 30 auf, mit der es in die Verriegelungselementaufnahme 6 des Gegensteckerteils 2 in der Eingriffsstellung eingreift. Am Verriegelungselement 5 ist weiters das Ansatzelement 10 vorgesehen, welches, wie weiter hinten erläutert, dazu dient, das Verriegelungselement 5 gezielt in Freigaberichtung 8 mittels des Betätigungselementes 11 auszulenken.

Abweichend vom hier gezeigten Ausführungsbeispiel könnte, um die Vorspannung des Vorspannelementes 4 in Verriegelungsrichtung 7 einstellen zu können, ein Stellglied vorgesehen sein. Es könnte sich dabei z.B. um eine hier nicht dargestellte, in Verriegelungsrichtung 7 auf das Vorspannelement 4 einwirkende Stellschraube handeln, mit der das Vorspannelement 4 z.B. zur Erhöhung der Vorspannung weiter komprimiert oder zur Verringerung der Vorspannung entlastet wird. Dieses Stellglied würde günstigerweise auf der dem Verriegelungselement 5 entgegengesetzten Seite auf das Vorspannelement 4 einwirken.

In den Fig. 1 bis 6 ebenfalls eingezeichnet, sind die der Verriegelungsrichtung 7 entgegengesetzte Richtung 9 sowie die Freigaberichtung 8 und die Zusammensteckrichtung 12.

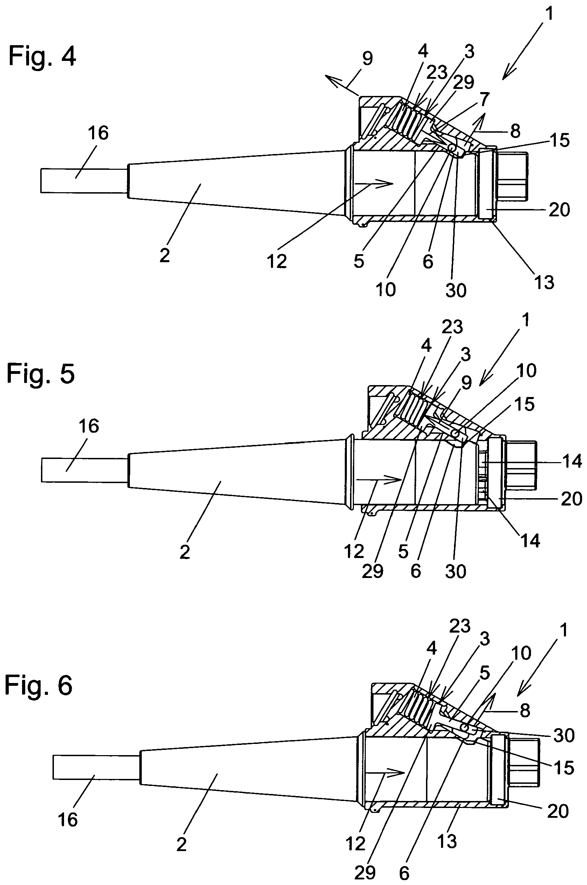

In Fig. 1 sind das Steckerteil 1 und das Gegensteckerteil 2 im voneinander getrennten Zustand gezeigt. Durch Zusammenstecken dieser Steckverbindung, also durch Einstecken des Gegensteckerteils 2 in das hier als Buchse ausgeführte Steckerteil 1 in Zusammensteckrichtung 12, trifft das vordere, hier mit einer Abschrägung 31 versehene Ende des Gegensteckerteils 2 auf das sich in der Eingriffsstellung befindende Verriegelungselement 5. Diese Situation ist in Fig. 2 dargestellt. Durch weiteres Einschieben des Gegensteckerteils 2 in Zusammensteckrichtung 12 in das Steckerteil 1 kommt es zur Auslenkung des Verriegelungselementes 5 in die zur Verriegelungsrichtung 7 abgewinkelte Freigaberichtung 8. Hierdurch wird das Verriegelungselement 5 bzw. vor allem seine Verriegelungsnase 30 aus der Eingriffsstellung gemäß Fig. 1 und 2 in die Freigabestellung gemäß Fig. 3 bewegt. In dieser Freigabestellung gemäß Fig. 3 kann das vordere Ende des Gegensteckerteils 2 bzw. dessen Abschrägung 31 so weit an der Verriegelungsnase 30 bzw. am Verriegelungselement 5 vorbeigeschoben werden, bis das Verriegelungselement 5 vom Vorspannelement 4 wieder in die Eingriffsstellung zurückbewegt wird. Dies ist in Fig. 4 gezeigt. In diesem vollständig zusammengeschobenen Zustand von Steckerteil 1 und Gegensteckerteil 2 greift das Verriegelungselement 5 in seiner Eingriffstellung in die Verriegelungselementaufnahme 6 des Gegnsteckerteils 2 ein. Im gezeigten Ausführungsbeispiel steht das Verriegelungselement 5 in dieser Stellung an der Stützfläche 15, welche die Verriegelungselementaufnahme 6 auf der einen Seite begrenzt, an. Wie aus dem Vergleich der Fig. 2, 3 und 4 gut zu entnehmen ist, ist die Bewegung des Verriegelungselementes 5 in Freigaberichtung 8 und in der dazu entgegengesetzten Richtung eine Verschwenkbewegung. Wie eingangs bereits erläutert, ist dies bevorzugt vorgesehen, muss aber nicht zwingend so sein. Es wäre auch denkbar, das gesamte Verriegelungselement 5 in Freigaberichtung 8 zu verschieben oder eine Überlagerung einer Verschwenkbewegung und einer Verschiebebewegung zu realisieren. Der Aufnahmeraum 23 ist jedenfalls so ausgebildet, dass er mit seinen ihn begrenzenden Wänden das Verriegelungselement 5 entsprechend führt und lagert.

In Fig. 5 ist nun ein Missbrauchsfall dargestellt, bei dem durch entsprechenden Zug am Kabel 16 entgegen der Zusammensteckrichtung 12 die Steckverbindung getrennt wird. Beim gezeigten Ausführungsbeispiel muss hierfür das in die Verriegelungselementaufnahme 6 eingreifende und an der Stützfläche 15 angreifende Verriegelungselement 5 in die zur Verriegelungsrichtung 7 entgegengesetzte Richtung 9 gegen die Maximalkraft des Vorspannelementes 4 verschoben werden. Erst wenn durch entsprechend weites Verschieben des Verriegelungselementes 5 in die entgegengesetzte Richtung 9 die weitere Freigabestellung, in der das Verriegelungselement 5 die Stützfläche 15 freigibt, erreicht ist, kann das Gegensteckerteil 2 aus dem Steckerteil 1 herausgezogen werden. Wie eingangs bereits erläutert, ist hierbei günstigerweise vorgesehen, dass ausgehend von der Eingriffsstellung zur Bewegung des Verriegelungselementes 5 in der zur Verriegelungsrichtung 7 entgegengesetzten Richtung 9, also in dem in Fig. 5 gezeigten Missbrauchsfall, größere Kräfte notwendig sind, als zur Bewegung des Verriegelungselementes 5 in der Freigaberichtung 8, wie dies im gezeigten Ausführungsbeispiel beim Zusammenstecken von Steckerteil 1 und Gegensteckerteil 2 gemäß der Fig. 2 bis 4 der Fall ist. Hierdurch müssen beim Zusammenstecken gemäß der Fig. 2 bis 4 wesentlich geringere Kräfte aufgebracht werden, als beim Auseinanderziehen im Missbrauchsfall gemäß Fig. 5. Dies wird im gezeigten Ausführungsbeispiel erreicht, indem das Vorspannelement 4 das Verriegelungselement 5 in der Verriegelungsrichtung 7 stärker als in der Freigaberichtung 8 vorspannt.

In Fig. 6 ist gezeigt, wie das Verriegelungselement 5 gezielt in Freigaberichtung 8 bewegt wird, um die Verriegelung und damit die Steckverbindung zwischen Steckerteil 1 und Gegensteckerteil 2 zu lösen. Das Bewegen bzw. Verschwenken des Verriegelungselementes 5 erfolgt in diesem Fall über das Betätigungselement 11, welches hier als verschwenkbarer, von außen betätigbarer Hebel, am Steckerteil 1 ausgebildet ist und am Ansatzelement 10 des Verriegelungselementes 5 angreift, um dies mit relativ geringen Kräften in Freigaberichtung 8 bewegen zu können.

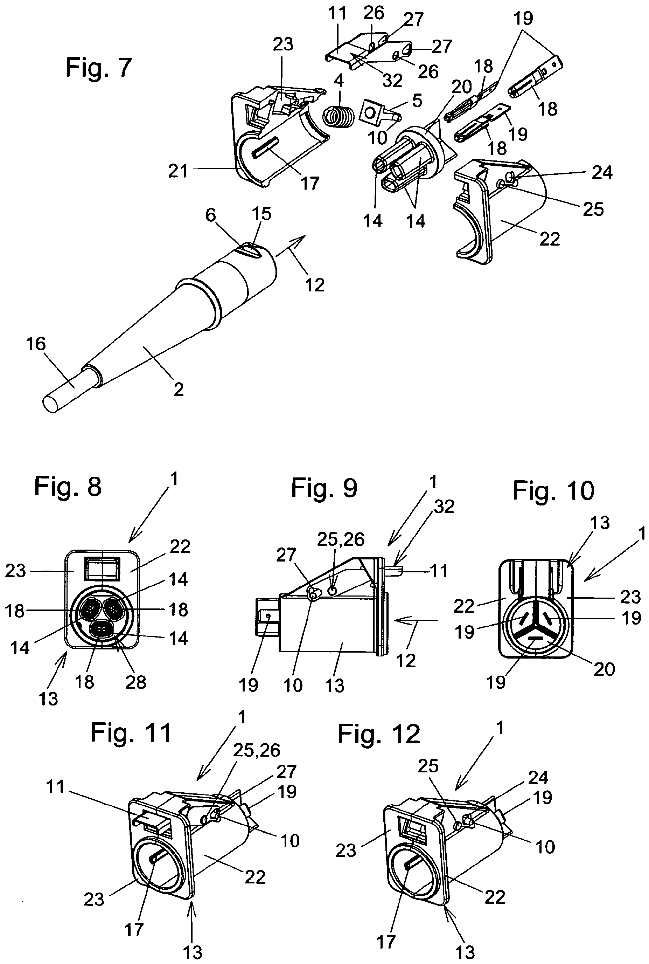

Das außen am Ansatzelement 10 des Verriegelungselementes 5 angreifende Betätigungselement 11 ist besonders gut in der Explosionsdarstellung gemäß Fig. 7 zu sehen. Es handelt sich im gezeigten Ausführungsbeispiel um einen verschwenkbaren Hebel. Die Schwenkachse bilden die Schwenkachszapfen 25 am Gehäuse 13. Mit den Schwenkachszapfenaufnahmen 26 sitzt das Betätigungselement 11 auf diesen Schwenkachszapfen 25 um, um diese geschwenkt zu werden. Die Ansatzelemente 10 des Verriegelungselementes 5 durchdringen jeweils eine Kulisse 24 im Gehäuse 13 bzw. den Gehäuseteilen 21 und 22 und greifen dann in die Ansatzelementaufnahmen 27 des Betätigungselementes 11 ein. Die Kulissen 24 sind so ausgebildet, dass das Verriegelungselement 5 sowohl in Verriegelungsrichtung 7 als auch in der entgegengesetzten Richtung 9 verschoben und auch in die Freigaberichtung 8 verschwenkt werden kann. Durch Drücken auf die Betätigungsfläche 32 des Betätigungselementes 11 wird das Betätigungselement 11 um die Schwenkachszapfen 25 geschwenkt, um dadurch das Verriegelungselement 5 in Freigaberichtung 8 in die Freigabestellung gemäß Fig. 6 zu schwenken, um so mit geringem Kräfteaufwand das Gegensteckerteil 2 vom Steckerteil 1 trennen zu können.

Neben den anderen bereits genannten Bauteilen ist in Fig. 7 auch die Indexschiene 17 am Gehäuseteil 21 gut zu sehen. Diese dient, wie gesagt, dazu, dass das Gegensteckteil 2 nur in einer einzigen definierten Stellung in den Aufnahmehohlraum 28 des Steckerteils 1 eingeschoben werden kann. Hiermit kann z.B. eine falsche Polung beim Zusammenstecken verhindert werden. Die Nut des Gegensteckerteils 2, in die die Indexschiene 17 beim Zusammenstecken eingeführt wird, ist in den hier gezeigten Darstellungen nicht zu sehen. Indexierungen dieser Art können natürlich auch ganz anders ausgestaltet sein.

Gut zu sehen ist in Fig. 7 auch die Stützfläche 15 in der kerbenartig ausgebildeten Verriegelungselementaufnahme 6. Zu sehen sind auch die im fertig montierten Zustand innerhalb der Kontakthülsen 14 angeordneten Elektrokontakte 18 des Steckerteils 1 dieses Ausführungsbeispiels. Die Elektrokontakte 18 weisen Anschlüsse 19 zum Anschließen von Kabeln und dergleichen auf. Die entsprechenden Gegenkontakte im Gegensteckerteil 2 sind hier nicht extra gezeigt. Sie können aber, wie beim Stand der Technik bekannt, ausgeführt sein.

Fig. 8 zeigt einen Blick von vorne auf das Steckerteil 1, bei dem man in den Aufnahmehohlraum 28 hineinsieht, in welchem die Kontakthülsen 14 mit den Elektrokontakten 18 des Steckerteils 1 gut zu sehen sind. Fig. 9 zeigt eine Seitenansicht dieses Steckerteils 1. Hier ist besonders gut der Eingriff des Ansatzelementes 10 in die Ansatzelementaufnahme 27 des Betätigungselementes 11 zu sehen. Gut erkennbar ist in dieser Darstellung auch die Betätigungsfläche 32 des Betätigungselementes 11. Durch Drücken auf die Betätigungsfläche 32 wird das Betätigungselement 11 verschwenkt, um das Verriegelungselement 5, wie in Fig. 6 gezeigt, in die Freigabestellung zu bringen.

Fig. 10 zeigt eine Ansicht von hinten auf das Steckerteil 1, bei der die im Kontaktträger 20 angeordneten Anschlüsse 19 der Elektrokontakte 18 besonders gut zu sehen sind.

In der perspektivischen Ansicht gemäß Fig. 11 auf das Steckerteil 1 ist das Betätigungselement 11 gezeigt. In der ansonsten gleichen perspektivischen Ansicht gemäß Fig. 12 ist das Betätigungselement 11 weggelassen, sodass man die Kulisse 24 im Gehäuse 13 bzw. den Gehäuseteil 22 gut sieht.

**Legende zu den Hinweisziffern:**

| | | | |
|---|---|---|---|
| 1 | Steckerteil | 17 | Indexschiene |
| 2 | Gegensteckerteil | 18 | Elektrokontakt |
| 3 | Verriegelungseinrichtung | 19 | Anschluss |
| 4 | Vorspannelement | 20 | Kontaktträger |
| 5 | Verriegelungselement | 21 | Gehäuseteil |
| 6 | Verriegelungselementaufnahme | 22 | Gehäuseteil |
| 7 | Verriegelungsrichtung | 23 | Aufnahmeraum |
| 8 | Freigaberichtung | 24 | Kulisse |
| 9 | entgegengesetzte Richtung | 25 | Schwenkachszapfen |
| 10 | Ansatzelement | 26 | Schwenkachszapfenaufnahme |
| 11 | Betätigungselement | 27 | Ansatzelementaufnahme |
| 12 | Zusammensteckrichtung | 28 | Aufnahmehohlraum |
| 13 | Gehäuse | 29 | Druckteller |
| 14 | Kontaktfläche | 30 | Verriegelungsnase |
| 15 | Stützfläche | 31 | Abschrägung |
| 16 | Kabel | 32 | Betätigungsfläche |

## Patentansprüche

1. Steckerteil (1) zum Zusammenstecken mit einem Gegensteckerteil (2), wobei das Steckerteil (1) zumindest eine Verriegelungseinrichtung (3) zum Verriegeln des Steckerteils (1) mit dem Gegensteckerteil (2) aufweist, und die Verriegelungseinrichtung (3) zumindest ein Vorspannelement (4) und zumindest ein Verriegelungselement (5) zum Eingriff in eine Verriegelungselementaufnahme (6) des Gegensteckerteils (2) in einer Eingriffsstellung des Verriegelungselements (5) aufweist und das Verriegelungselement (5) mittels des Vorspannelements (4) in einer Verriegelungsrichtung (7) hin zur Eingriffsstellung elastisch vorgespannt ist und das Verriegelungselement (5) in einer zur Verriegelungsrichtung (7) abgewinkelten Freigaberichtung (8) aus der Eingriffsstellung in eine Freigabestellung bewegbar ist, **dadurch gekennzeichnet, dass** das Verriegelungselement (5) gegen die Vorspannung des Vorspannelementes (4) aus der Eingriffsstellung heraus in einer zur Verriegelungsrichtung (7) entgegen gesetzten Richtung (9) in eine weitere Freigabestellung linear verschiebbar ist und das Verriegelungselement (5) in der Verriegelungsrichtung (7) und in der dazu entgegengesetzten Richtung (9) linear verschiebbar im oder am Steckerteil (1) gelagert ist.

2. Steckerteil (1) nach Anspruch 1, **dadurch gekennzeichnet, dass** ausgehend von der Eingriffsstellung zur Bewegung des Verriegelungselementes (5) in der zur Verriegelungsrichtung (7) entgegen gesetzten Richtung (9) größere Kräfte notwendig sind als zur Bewegung des Verriegelungselementes (5) in der Freigaberichtung (8).

3. Steckerteil (1) nach einem der Ansprüche 1 oder 2, **dadurch gekennzeichnet, dass** das Vorspannelement (4) das Verriegelungselement (5) in der Verriegelungsrichtung (7) stärker als in der Freigaberichtung (8) vorspannt und/oder dass die Maximalkraft des Vorspannelementes (4) in der Verriegelungsrichtung (7) wirkt.

4. Steckerteil (1) nach einem der Ansprüche 1 bis 3, **dadurch gekennzeichnet, dass** das Verriegelungselement (5) in Freigaberichtung (8) verschwenkbar gelagert ist.

5. Steckerteil (1) nach einem der Ansprüche 1 bis 4, **dadurch gekennzeichnet, dass** am Verriegelungselement (5) ein Ansatzelement (10) für ein von außen betätigbares verschwenkbares und/oder verschiebbares Betätigungselement (11) des Steckerteils (1) angeordnet ist.

6. Steckerteil (1) nach einem der Ansprüche 1 bis 5, **dadurch gekennzeichnet, dass** das Steckerteil (1) eine Buchse ist, in die das Gegensteckerteil (2) einschiebbar ist.

7. Steckerteil (1) nach einem der Ansprüche 1 bis 6, **dadurch gekennzeichnet, dass** das Steckerteil (1) in einer Zusammensteckrichtung (12) mit dem Gegensteckerteil (2) zusammensteckbar ist und die Zusammensteckrichtung (12) und die Verriegelungsrichtung (7) in einem spitzen Winkel kleiner 90° relativ zueinander angeordnet sind.

8. Steckverbindung, **dadurch gekennzeichnet, dass** die Steckverbindung ein Steckerteil (1) nach einem der Ansprüche 1 bis 7 und ein Gegensteckerteil (2) aufweist, wobei das Verriegelungselement (5) des Steckerteils (1) im vollständig zusammengesteckten Zustand von Steckerteil (1) und Gegensteckerteil (2) in der Eingriffsstellung in die Verriegelungselementaufnahme (6) des Gegensteckerteils (2) eingreift.

## Claims

1. A connector part (1) for plugging together with a counter connector part (2), wherein the connector part (1) has at least one locking device (3) for locking the connector part (1) to the counter connector part (2), and the locking device (3) has at least one pretensioning member (4) and at least one locking member (5) for engagement with a locking member receiver (6) of the counter connector part (2) in an engagement position of the locking member (5) and the locking member (5) is resiliently pretensioned in a locking direction (7) towards the engagement position by means of the pretensioning member (4) and the locking member (5) is movable, in a release direction (8) at an angle to the locking direction (7), from the engagement position into a release position, **characterised in that** against the pretensioning of the pretensioning member (4), the locking member (5) is linearly displaceable, in a direction (9) opposite to the locking direction (7), from the engagement position into a further release position, and the locking member (5) is mounted in or on the connector part (1) so as to be linearly displaceable in the locking direction (7) and in the opposite direction (9).

2. A connector part (1) according to claim 1, **characterised in that** starting from the engagement position, greater forces are required for movement of the locking member (5) in the direction (9) opposite to the locking direction (7) than for movement of the locking member (5) in the release direction (8).

3. A connector part (1) according to one of claims 1 and 2, **characterised in that** the pretensioning member (4) pretensions the locking member (5) to a greater extent in the locking direction (7) than in the release direction (8), and/or **in that** the maximum force of the pretensioning member (4) acts in the locking direction (7).

4. A connector part (1) according to any one of claims 1 to 3, **characterised in that** the locking member (5) is mounted so as to be pivotable in the release direction (8).

5. A connector part (1) according to any one of claims 1 to 4, **characterised in that** on the locking member (5) there is arranged an attachment part (10) for an actuating member (11), externally actuatable, pivotable and/or displaceable, of the connector part (1).

6. A connector part (1) according to any one of claims 1 to 5, **characterised in that** the connector part (1) is a female connector into which the counter connector part (2) is insertable.

7. A connector part (1) according to any one of claims 1 to 6, **characterised in that** the connector part (1) can be plugged together with the counter connector part (2) in a plugging together direction (12) and the plugging together direction (12) and the locking direction (7) are arranged at an acute angle of less than 90° relative to one another.

8. A plug-and-socket connection, **characterised in that** the plug-and-socket connection has a connector part (1) according to any one of claims 1 to 7 and a counter connector part (2), wherein in the completely plugged-together state of connector part (1) and counter connector part (2), the locking member (5) of the connector part (1) engages the locking member receiver (6) of the counter connector part (2) in the engagement position.

## Revendications

1. Pièce enfichable (1) destinée à s'enficher avec une pièce enfichable complémentaire (2), la pièce enfichable (1) étant munie d'au moins un dispositif de verrouillage (3) pour verrouiller la pièce enfichable (1) avec la pièce enfichable complémentaire (2), et le dispositif de verrouillage (3) étant muni d'au moins un élément de précontrainte (4) et d'au moins un élément de verrouillage (5) destiné à s'engager dans un logement d'élément de verrouillage (6) de la pièce enfichable complémentaire (2) dans une position d'engagement de l'élément de verrouillage (5), et l'élément de verrouillage (5) étant précontraint élastiquement dans une direction de verrouillage (7) vers la position d'engagement au moyen de l'élément de précontrainte (4), et l'élément de verrouillage (5) pouvant être déplacé de la position d'engagement dans une position de libération dans une direction de libération (8) inclinée par rapport à la direction de verrouillage (7), **caractérisé en ce que** l'élément de verrouillage (5) peut être déplacé linéairement hors de la position d'engagement dans une autre position de libération dans une direction (9) opposée à la direction de verrouillage (7) contre la précontrainte de l'élément de précontrainte (4), et l'élément de verrouillage (5) est logé dans ou sur la pièce enfichable (1) de manière à pouvoir être déplacé linéairement dans la direction de verrouillage (7) et dans la direction opposée (9).

2. Pièce enfichable (1) selon la revendication 1, **caractérisée en ce que** des forces plus importantes sont nécessaires pour déplacer l'élément de verrouillage (5) depuis la position d'engagement dans la direction (9) opposée à la direction de verrouillage (7), que pour déplacer l'élément de verrouillage (5) dans la direction de libération (8).

3. Pièce enfichable (1) selon l'une des revendications 1 ou 2, **caractérisée en ce que** l'élément de précontrainte (4) précontraint l'élément de verrouillage (5) plus fortement dans la direction de verrouillage (7) que dans la direction de libération (8), et/ou **en ce que** la force maximale de l'élément de précontrainte (4) agit dans la direction de verrouillage (7).

4. Pièce enfichable (1) selon l'une des revendications 1 à 3, **caractérisée en ce que** l'élément de verrouillage (5) est logé pivotant dans la direction de libération (8).

5. Pièce enfichable (1) selon l'une des revendications 1 à 4, **caractérisée en ce qu'**un élément en saillie (10) est disposé sur l'élément de verrouillage (5) pour un élément d'actionnement (11) de la pièce enfichable (1) lequel peut pivoter et/ou être déplacé de l'extérieur.

6. Pièce enfichable (1) selon l'une des revendications 1 à 5, **caractérisée en ce que** la pièce enfichable (1) est une douille dans laquelle peut être insérée la pièce enfichable complémentaire (2).

7. Pièce enfichable (1) selon l'une des revendications 1 à 6, **caractérisée en ce que** la pièce enfichable (1) peut s'enficher avec la pièce enfichable complémentaire (2) dans une direction de montage par enfichage (12), et la direction de montage par enfichage (12) et la direction de verrouillage (7) sont disposées l'une par rapport à l'autre avec un angle aigu inférieur à 90°.

8. Connexion enfichable, **caractérisée en ce que** la connexion enfichable comprend une pièce enfichable (1) selon l'une des revendications 1 à 7 et une pièce enfichable complémentaire (2), l'élément de verrouillage (5) de la pièce enfichable (1) en position engagée, à l'état entièrement monté de la pièce enfichable (1) et de la pièce enfichable complémentaire (2), venant en prise dans le logement d'élément de verrouillage (6) de la pièce enfichable complémentaire (2).
